# NEW EUROPEAN PATENT SPECIFICATION

(11) **EP 0 310 738 B2**
(45) Date of publication and mention of the opposition decision: **30.07.1997**
(45) Mention of the grant of the patent: 05.08.1992
(21) Application number: 88103698.2
(22) Date of filing: 09.03.1988
(51) Int. Cl.: A62B 9/02, B63C 11/22

(54) **Valve particularly for automatic delivery devices for self-contained air breathing apparatuses**
Ventil speziell für automatische Abgabevorrichtung für unabhängige Luftatemgeräte
Soupape, notamment pour dispositifs de distribution automatiques pour respirateurs à air

(30) Priority: 07.10.1987 IT 1523087 U
(43) Date of publication of application: 12.04.1989
(73) Proprietor: SCUBAPRO EUROPE S.r.l., I-16030 Casarza Ligure (GE) (IT)
(72) Inventor: Semeia, Roberto, I-16035 Rapallo (IT)
(74) Representative: Porsia, Bruno

(56) References cited:
- DE-A- 2 745 795
- DE-A- 3 000 753
- DE-C- 665 170

## Description

The present invention refers to a valve preferably used in automatic delivery devices for self-contained air breathing apparatuses, and comprising two cooperating coaxial members, one of which performs the function of an axially sliding plug and the other of a correlative seat, the one member consisting of a tubular body with an end edge being intended for cooperating along a closed sealing line with and against a concavely cone shaped contact surface on the other member.

A valve of this type is known as a pressure regulator from the breathing apparatus SPIROMATIC. In this valve, the tubular body of the one member has an external, rounded free end edge, and the concave contact surface is formed by a flat lower surface surrounded by a relatively low, small frustoconical border. The outside diameter of the opening at the base of the frustoconical border is only a few tenths of millimeters (0,1-0,2) greater than the outside diameter of the tubular body.

In another known valve of this kind, that is disclosed in the document DE-A-3 000 753, the tubular body of the one member has a sharp end edge which however cooperates with a flat contact surface of the other member.

In the known valves of this kind, the tubular body of the one member is theoretically arranged co axially to the frustoconical contact surface or perpendicularly to the flat contact surface of the other member. Practically, however, the tolerances in machining the said members result in such a co-axial or perpendicular arrangement thereof often failing. This is the cause of some technical and functional inconveniences, such as hisses, vibrations, asymmetrical cuts into the contact surface, and a leakage on the said surface.

The present invention aims to eliminate the aforementioned inconveniences and, for this purpose, the same suggests a valve according to the preamble of claim 1, and characterized by the combination of the features indicated in the characterizing part of claim 1. This combination of features renders a perfect cooperation possibile between the tubular body of the one member and the contact surface of the other member and, within certain limits, even with an offset and/or an inclination therebetween, whereby a regular variation in the opening for the fluid outflow is attained. Morevoer, the full conical shape of the contact surface determines the self-centering to this surface of the tubular body.

These and other features of a valve according to the invention and the advantages arising therefrom will clearly appear in the following detailed description thereof, made by referring to the annexed sheet of drawings, in which:
Figure 1 is a longitudinal section through a valve according to the invention, which is used in the first stage of an automatic two--stage delivery device for self-contained air breathing apparatuses;
Figure 2 shows, still in a sectional view, a significant detail of said valve.

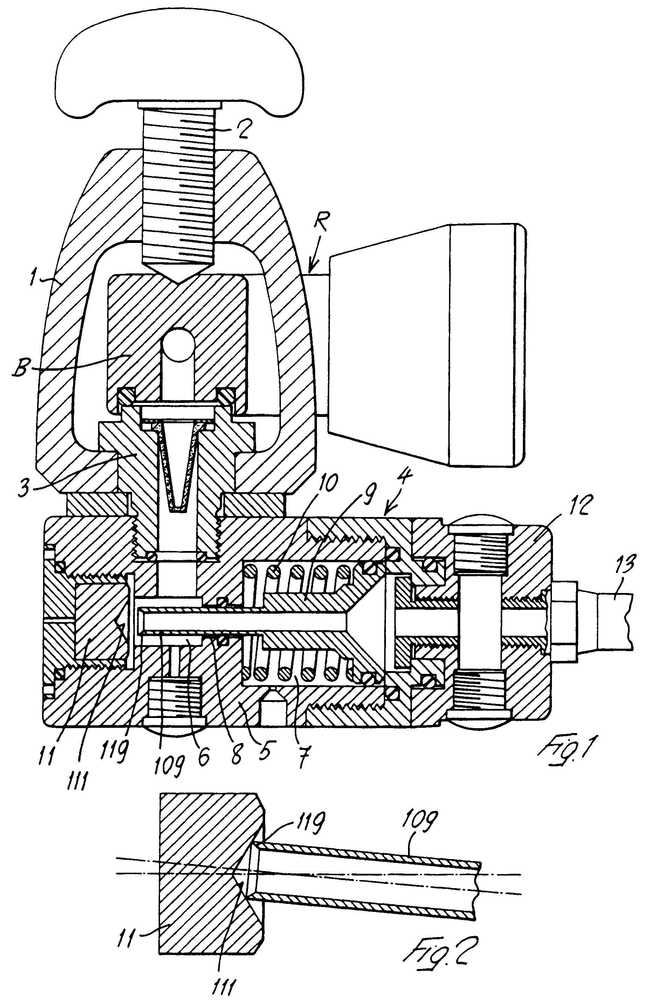

In Figure 1, B denotes the outlet of a cock R applied to a bottle (not shown) containing compressed air. To this outlet B there is connected by means of a cooperating stirrup 1 and a clamping screw 2, a tubular inlet union 3 forming part of a valve unit 4 constituting the first air pressure-reducing stage of an automatic two-stage delivery device for slef-contained air breathing apparatuses.

The said valve unit 4 comprises a body 5 within which two co-axial chambers 6 and 7 are longitudinally formed, with a conduit 8 being provided therebetween. A hollow plug 9 normally made of a metallic material is slidably arranged within the body 5, and its spout end portion 109 is received in chamber 6, while the real and proper body of said plug is accomodated in the conjoined chamber 7 and cooperates with a cylindrical spiral spring 10.

Co-axially to the hollow plug 9, the body 5 carries a seat set in correspondence of the edge 119 of the plug spout 109, and consisting of a replaceable block 11 preferably of a non-metallic material, with which the said spout cooperates for controlling the fluid outflow from the delivery outlet B to a tubular outlet union 12 mounted onto the body 5 at its end opposite to the block 11, and connected through a flexible hose 13 to the second stage (not shown) of said delivery device.

According to the main feature of the invention, the end surface 111 of block 11, which is intended for contacting the edge 119 of spout 109, has a concave, particularly a conical shape.

Thus, if owing to any inevitable machining tolerances, the spout 109 is not exactly co-axial to the block 11 and so it is at an angle therewith, as it appears with an evident and intentional exaggeration from Figure 2, the spout and the block will still cooperate in a quite acceptable manner, so that they afford the possibility of cutting off entirely the pressurized air flow, or of making a regular change in the opening for the outflow of said air.

Moreover, the conicity of the surface 111 of block 11 determines the self-centering of the spout 109 with respect to the said surface.

The above disclosed improvement according to the invention may be embodied also in those valves in which the block is carried by a plug still of the co-axial type, and cooperates with a seat consisting of a tubular element. Valves of this kind may be, for example, used in the second reducing stage of a delivery device for self-contained breathing apparatuses.

From the foregoing, it clearly appears that a valve according to the invention affords, as compared with the similar known valves, a number of advantages, among which:
- No hisses and vibrations at all;
- No asymmetrical cut into the block;
- A self-centering of the tubular piece with respect to the block;
- A perfect functionality.

## Claims

1. A valve (4) preferably used in automatic delivery devices for self-contained air breathing apparatuses, and comprising two cooperating coaxial members (9, 11), one of which performs the function of an axially sliding plug (9) and the other of a correlative seat (11), the one member (9) consisting of a tubular body (109) with an end edge (119) being intended for cooperating along a closed sealing line with and against a concavely cone-shaped contact surface (111) on the other member (11), which valve is characterized in that
a) the tubular body (109) has a sharp end edge (119),
b) the contact surface (111) has a full conical shape,
c) the opening at the base of the fully conically shaped contact surface (111) is greater than the outside diameter of the end edge (119) of the tubular body (109), to such an extent as to obtain a uniform sealing contact along the said sealing line, even when the said two members are not exactly coaxial and, for instance, reciprocally inclined due to machining tolerances.

2. The valve according to claim 1, in which the said contact surface (111) is formed in a block element (11).

3. The valve according to claim 2, in which the said block element (11) is made of a non-metallic material.

4. The valve according to any one of the preceding claims, in which the said tubular body (109) is made of a metallic material.

## Patentansprüche

1. Ventil (4), vorzugsweise für eine automatische Abgabevorrichtung für unabhängige Luftatemgeräte, mit zwei zusammenwirkenden koaxialen Elementen (9, 11), von denen eines die Funktion eines axial verschiebbaren Kükens (9) und das andere die eines entsprechenden Sitzes (11) ausübt, wobei das Küken (9) einen hohlzylindrischen Körper (109) mit einer Endkante (119) aufweist, die so ausgelegt ist, dass sie entlang einer geschlossenen Abdichtlinie mit einer konkaven kegelförmigen Kontaktfläche (111) an dem anderen Element (11) zusammenwirken bzw. gegen diese wirken kann,
dadurch gekennzeichnet, dass
a) der hohlzylindrische Körper (109) eine scharfe Endkante (119) aufweist,
b) die Kontaktfläche (111) eine vollkonische Form besitzt,
c) die Öffnung an der Unterfläche der vollkonisch geformten Kontaktfläche (111) um einen solchen Wert größer ist als der Außendurchmesser der Endkante (119) des hohlzylindrischen Körpers (109), dass ein gleichmäßiger Dichtkontakt entlang der Abdichtlinie erzielt wird, auch wenn die beiden Elemente aufgrund von Fertigungstoleranzen nicht genau koaxial zueinander ausgerichtet, sondern z.B. zueinander geneigt sind.

2. Ventil nach Anspruch 1, bei dem die Kontaktfläche (111) in einem Absperrelement (11) ausgebildet ist.

3. Ventil nach Anspruch 2, bei dem das Absperrelement (11) aus einem nichtmetallischen Werkstoff besteht.

4. Ventil nach einem der vorhergehenden Ansprüche, bei dem der hohlzylindrische Körper (109) aus einem metallischen Werkstoff besteht.

## Revendications

1. Soupape (4) de préférence pour dispositifs de distribution automatique pour respirateurs à air autonomes, et comprenant deux éléments coaxiaux coopérant (9, 11), dont l'un réalise la fonction d'un piston axialement coulissant (9) et l'autre celle d'un siège correspondant (11), l'un des premier éléments (9) étant constitué d'un corps tubulaire (109) avec un bord d'extrémité (119) destiné à coopérer le long d'une ligne d'étanchéité fermée avec une surface de contact (111) conformée de manière concave de l'autre élément (11), ladite soupape étant caractérisée en ce que :
a) le corps tubulaire (109) présente un bord d'extrémité effilé,
b) la surface de contact (111) a une forme de cône complet,
c) l'ouverture à la base de la surface de contact (111) en forme de cône complet est supérieure en diamètre externe du bord d'extrémité (119) du corps tubulaire (109), de telle manière que l'on obtient un contact étanche uniforme le long de ladite ligne d'étanchéité, même lorsque les deux éléments susdits ne sont pas exactement coaxiaux et, par exemple, sont inclinés l'un par rapport à l'autre du fait des tolérances d'usinage.

2. Soupape suivant la revendication 1, dans laquelle ladite surface de contact (111) est formée dans un élément monobloc (11).

3. Soupape suivant la revendication 2, dans laquelle l'élément monobloc (11) est constitué d'un matériau non métallique.

4. Soupape suivant l'une quelconque des revendications précédentes, dans laquelle ledit corps tubulaire (109) est constitué d'un matériau métallique.
